# EUROPEAN PATENT APPLICATION

(11) **EP 3 720 064 A1**
(43) Date of publication of application: **07.10.2020**
(21) Application number: 18898081.7
(22) Date of filing: 11.12.2018
(51) Int. Cl.: H04L 12/721

(54) **PATH CALCULATION METHOD AND DEVICE UNDER MULTI-DIMENSIONAL CONSTRAINTS, PROCESSOR AND STORAGE MEDIUM**

(30) Priority: 03.01.2018 CN 201810005339
(71) Applicant: ZTE Corporation, shenzhen Guangdong 518057 (CN)
(72) Inventor: LU, Qianchun, Shenzhen, Guangdong 518057 (CN); LI, Feng, Shenzhen, Guangdong 518057 (CN); YAN, Feng, Shenzhen, Guangdong 518057 (CN)
(74) Representative: Flügel Preissner Schober Seidel
(86) International application number: PCT/CN2018/120350
(87) International publication number: WO 2019/134483

(57) **Abstract**

The present disclosure discloses path calculation method memory, device, processor, and storage medium under multidimensional restriction. The method includes: receiving a path calculation request from a business, wherein there are a plurality of business scenarios for the business, and the path calculation request comprises at least one of the following information: a restriction type corresponding to the business, and an evaluation type corresponding to the business; matching the restriction type with a preset multidimensional restriction model to acquire a multidimensional restriction set corresponding to the business; matching the evaluation type with a preset evaluation model to acquire an evaluation function corresponding to the business; and performing path calculation according to the multidimensional restriction set and the evaluation function.

## Description

### CROSS-REFERENCES TO RELATED APPLICATIONS

This disclosure claims the priority of Chinese Patent Application No. 201810005339.9 filed on January 3, 2018, which is hereby incorporated by reference in its entirety.

### TECHNICAL FIELD

The present disclosure relates to, but is not limited to, the field of communication, and in particular to a path calculation method, device, processor, and storage medium under multidimensional restriction.

### BACKGROUND

Software-defined network (SDN) is a new type of network structure, in which the SDN controller is disposed in a middle layer in a three-layer architecture and serves as a connecting link between the preceding and the following. The core of the controller lies in that the control plane and the forwarding plane are separated, and the control plane fully controls the forwarding actions, so that devices becomes complete white boxes. The business application layer is a top layer in the SDN network, and it includes some applications that capable of implementing security, management, and other special functions via the controller. Therefore, the application layer is where the SDN controller executes control.

The following problems exist in the related art.

First, the SDN controller bundles asset storage, business module, and path calculation together and disposes them in the controller, and the coupling is tight. When the scenario is complicated and there are numerous applications and huge data volume in the scenario, it is difficult to solve the problem that the operating efficiency of the controller is low.

Secondly, in order for the SDN controller to perform path calculation under multidimensional restriction, bandwidth restriction and delay restriction are added to two or more determined restrictions, such as a multidimensional restriction set, and the paths are sorted by priority. These restrictions satisfy the business requirements to a certain extent, but it is difficult to be applied to increasingly complex business scenarios.

For example, with respect to searching for the shortest path for obtaining an optimal path (although sometimes, it is not the case in practice), product metrics often exist in complex business scenarios, for example, the reliability is the product of points; and maximum and minimum values may often exist in complex business scenarios as well, for example, the maximum bandwidth is taken as the remaining bandwidth, etc.. A linear combination is generally adopted for calculating cost of each edge, but actual situation is much more complicated than the linear combination. For example, the cost of edge is calculated according to priority; besides, some important application scenarios, such as active-standby separation path, Share Risk Link Groups (SRLG), are not taken into consideration.

When the network is unstable, oscillating and jittering occur and the link may be broken, etc.. Thus packet loss may occur for a period. At this time, the convergence time for route calculation is a key factor for improving user experience. The current path calculation under restriction is simple but crude. In short, all paths are sorted and then screened one by one for obtaining paths that satisfies the restriction. However, when the network is too large and the restriction is complex, low path calculation efficiency is an obvious problem.

From above, the problems in the related art are as follows:
A business module and a path calculation module of the SDN controller are coupled with each other, which cannot be adapted to expansion and change to new business scenarios; the path calculation module cannot be applied as an independent component to other business scenarios, such that the operating efficiency of the SDN controller is low; and the restrictions used in the path calculation process are fixed, such that the path calculation performance has a bottleneck.

### SUMMARY

In view of this, embodiments of the present disclosure provide a path calculation method, device, processor and storage medium under multidimensional restriction, so as to at least solve the following problems in the related art: the business module and the path calculation module of the SDN controller are coupled with each other and thus cannot be adapted to expansion and change to new business scenarios; the path calculation module cannot be applied as an independent component to other business scenarios, such that the operating efficiency of the SDN controller is low; and the restrictions used in the path calculation process are fixed, such that the path calculation performance has a bottleneck.

An embodiment of the present disclosure provides a path calculation method under multidimensional restriction, comprising: receiving a path calculation request from a business, wherein there are a plurality of business scenarios for the business, and the path calculation request comprises at least one of the following information: a restriction type corresponding to the business, and an evaluation type corresponding to the business; matching the restriction type with a preset multidimensional restriction model to acquire a multidimensional restriction set corresponding to the business; matching the evaluation type with a preset evaluation model to acquire an evaluation function corresponding to the business; and performing path calculation according to the multidimensional restriction set and the evaluation function.

In the above scheme, the preset multidimensional restriction model comprises at least one of the following: tenant identification ID, and the multidimensional restriction set; and the preset evaluation model comprises at least one of the following: next-hop evaluation for a network topology, and edge cost evaluation for each edge in the network topology.

In the above scheme, the method further comprises performing the following step before performing the path calculation according to the multidimensional restriction set and the evaluation function: constructing a network topology model, wherein, the network topology model comprises at least one of the following information: a topology node set, a topology link set, and a tenant set.

In the above scheme, the method further comprises: detecting whether the network topology information is changed; and updating the network topology model when detecting that the network topology information is changed.

In the above scheme, performing the path calculation according to the multidimensional restriction set and the evaluation function comprises: injecting the multidimensional restriction set during traversal of the network topology graph model; applying the multidimensional restriction set in a next-hop selection process for the network topology model, and injecting the evaluation function in the next-hop selection process and an edge cost selection process for the network topology model to realize the path calculation.

In the above scheme, the method further comprises performing the following step before performing the path calculation according to the multidimensional restriction set and the evaluation function: searching for an algorithm corresponding to the path calculation, wherein the algorithm comprises at least one of the following: top K optimal paths TopK algorithm under multidimensional restriction, share risk link group SRLG algorithm under multidimensional restriction, and shortest active-standby separation path algorithm under multidimensional restriction.

In the above scheme, the method further comprises: detecting in real time whether the business is changed; and re-searching the algorithm corresponding to the path calculation when the business is changed.

In the above scheme, the method further comprises performing the following step before performing the path calculation according to the multidimensional restriction set and the evaluation function: receiving resource information optimized by a performance analysis system, wherein the resource information is used for the path calculation.

In the above scheme, the method further comprises: delivering a calculation result of the path calculation.

An embodiment of the present disclosure further provides a path calculation device under multidimensional restriction, comprising:
a receiving module configured to receive a path calculation request from a business, wherein there are a plurality of business scenarios for the business, and the path calculation request comprises at least one of the following information: a restriction type corresponding to the business, and an evaluation type corresponding to the business; a first acquiring module configured to match the restriction type with a preset multidimensional restriction model to acquire a multidimensional restriction set corresponding to the business; a second acquiring module configured to match the evaluation type with a preset evaluation model to acquire an evaluation function corresponding to the business; and a calculation module configured to perform path calculation according to the multidimensional restriction set and the evaluation function.

In the above scheme, the preset multidimensional restriction model comprises at least one of the following: tenant identification ID, and the multidimensional restriction set; and the preset evaluation model comprises at least one of the following: next-hop evaluation for a network topology, and edge cost evaluation for each edge in the network topology.

In the above scheme, the device further comprises: a construction module configured to construct a network topology model before performing the path calculation according to the multidimensional restriction set and the evaluation function, wherein the network topology model comprises at least one of the following information: a topology node set, a topology link set, and a tenant set.

In the above scheme, the device further comprises: a detection module configured to detect whether the network topology information is changed; and an updating module configured to update the network topology model when detecting that the network topology information is changed.

In the above scheme, the calculation module comprises: an injection unit configured to inject the multidimensional restriction set during traversal of the network topology graph model; and a calculation unit configured to apply the multidimensional restriction set in a next-hop selection process for the network topology model, and inject the evaluation function in the next-hop selection process and an edge cost selection process for the network topology model to realize the path calculation.

In the above scheme, the device further comprises: a first search module configured to search for an algorithm corresponding to the path calculation before performing the path calculation according to the multidimensional restriction set and the evaluation function, wherein the algorithm comprises at least one of the following: top K optimal paths TopK algorithm under multidimensional restriction, share risk link group SRLG algorithm under multidimensional restriction, and shortest active-standby separation path algorithm under multidimensional restriction.

In the above scheme, the device further comprises: a detection module configured to detect in real time whether the business is changed; and a second search module configured to re-search the algorithm corresponding to the path calculation when the business is changed.

In the above scheme, the device further comprises a receiving module configured to receive resource information optimized by a performance analysis system before performing the path calculation according to the multidimensional restriction set and the evaluation function, wherein the resource information is used for the path calculation.

In the above solution, the device further comprises a delivery module configured to deliver a calculation result of the path calculation.

An embodiment of the present disclosure further provides a storage medium comprising a stored program, wherein, when being executed, the program performs the path calculation method under multidimensional restriction according to the embodiments of the present disclosure.

Another embodiment of the present disclosure further provides a processor configured to run a program, wherein, when being executed, the program performs the path calculation method under multidimensional restriction according to the embodiments of the present disclosure.

An embodiment of the present disclosure further provides a path calculation device under multidimensional restriction, comprising:
a memory configured to store a path calculation program under multidimensional restriction; and
a processor configured to execute the program, wherein, when being executed, the program performs the path calculation method under multidimensional restriction according to embodiments of the present disclosure.

By applying the embodiments of the present disclosure, a path calculation request is received from a business, wherein there are a plurality of business scenarios for the business, and the path calculation request comprises at least one of the following information: a restriction type corresponding to the business, and an evaluation type corresponding to the business; a match of the restriction type with a preset multidimensional restriction model is performed to acquire a multidimensional restriction set corresponding to the business; a match of the evaluation type with a preset evaluation model is performed to acquire an evaluation function corresponding to the business; and path calculation is performed according to the multidimensional restriction set and the evaluation function. That is to say, path calculation could be applied to any business scenario by decoupling the business from the path calculation (namely, by separating the business module from the SDN controller), thus solving the following problems in the prior art: the business module and the path calculation module of the SDN controller are coupled with each other, which cannot be adapted to expansion and change to new business scenarios; and the path calculation module cannot be used as an independent component to other business scenarios, such that the operating efficiency of the SDN controller is low. At the same time, any restriction set may be constructed by the multidimensional restriction model without closely associating the restrictions with the business, and thus the restriction set can be fully expanded to satisfy the requirements on complex business restriction in the future, so as to solve the problem that the path calculation performance has a bottleneck, and achieve the technical effect of network-wide resource optimization.

### BRIEF DESCRIPTION OF THE DRAWINGS

FIG. 1 is a flowchart illustrating a path calculation method under multidimensional restriction according to an embodiment of the present disclosure;
FIG. 2 is a diagram illustrating interaction relationships between a SDN controller and a performance analysis system, an orchestrator, an asset library according to an embodiment of the present disclosure;
FIG. 3 is a schematic diagram illustrating a module structure of the performance analysis system according to an embodiment of the present disclosure;
FIG. 4 is a schematic structural diagram illustrating a domain optimization module of the performance analysis system according to an embodiment of the present disclosure;
FIG. 5 is diagram illustrating relationship among components for topology information collection according to an embodiment of the present disclosure;
FIG. 6 is a schematic diagram illustrating information packages for topology nodes according to an embodiment of the present disclosure;
FIG. 7 is a schematic diagram illustrating information packages for topology links according to an embodiment of the present disclosure;
FIG. 8 is a schematic diagram illustrating attribute information packages for topology links according to an embodiment of the present disclosure;
FIG. 9 illustrates a topology instance model for a tenant city information model according to an embodiment of the present disclosure;
FIG. 10 is a CIM network-wide topology model according to an embodiment of the present disclosure;
FIG. 11 is a schematic diagram illustrating a basic information package for a single restriction according to an embodiment of the present disclosure;
FIG. 12 is a schematic diagram illustrating an information package for restriction unit according to an embodiment of the present disclosure;
FIG. 13 is a schematic diagram illustrating an information package for restriction set according to an embodiment of the present disclosure;
FIG. 14 is a schematic diagram illustrating an information package for restriction type according to an embodiment of the present disclosure;
FIG. 15 illustrates a multidimensional restriction model according to an embodiment of the present disclosure;
FIG. 16 illustrates an evaluation model according to an embodiment of the present disclosure;
FIG. 17 is a flowchart illustrating a path calculation workflow mechanism according to an embodiment of the present disclosure;
FIG. 18 is a flowchart illustrating an adaptation process performed before the path calculation starts according to an embodiment of the present disclosure;
FIG. 19 is a flowchart illustrating an analysis process for multidimensional restriction model according to an embodiment of the present disclosure;
FIG. 20 is a flowchart illustrating adaptation performed in the path calculation process according to an embodiment of the present disclosure;
FIG. 21 is a flowchart illustrating adaptation after the path calculation ends according to an embodiment of the present disclosure;
FIG. 22 is a flowchart illustrating a traversal algorithm for path calculation under multidimensional restriction according to an embodiment of the present disclosure;
FIG. 23 is a flowchart illustrating an optimal path algorithm under multidimensional restriction according to an embodiment of the present disclosure;
FIG. 24 is a flowchart illustrating a TopK optimal path algorithm under multidimensional restriction according to an embodiment of the present disclosure;
FIG. 25 is a flowchart illustrating a SRLG path algorithm under multidimensional restriction according to an embodiment of the present disclosure;
FIG. 26 is a flowchart illustrating an optimal active-standby separation path algorithm under multidimensional restriction according to an embodiment of the present disclosure;
FIG. 27 is a structural block diagram illustrating the path calculation device under multidimensional restriction according to an embodiment of the present disclosure; and
FIG. 28 is a structural block diagram illustrating the path calculation device under multidimensional restriction according to an embodiment of the present disclosure.

Hereinafter, the present disclosure will be described in detail with reference to the drawings and in conjunction with the embodiments. It should be noted that the embodiments in the present application and the features in the embodiments can be combined with each other if there is no conflict.

It should be noted that the terms "first" and "second" in the description and claims of the present disclosure and the above drawings are used to distinguish similar objects, but not used to describe a specific order or sequence.

Before describing the embodiments of the present disclosure, some terms mentioned in the embodiments of the present disclosure will be explained firstly.

The asset library is used to store resource information, including resources as nodes, links, ports, tunnel and pseudowire, etc. and related attribute information, and it mainly provides an asset cache interface for the SDN controller.

The performance analysis system (PAS) is mainly configured to provide an external strategy system for the orchestrator and provides performance analysis strategies, including network analysis and network optimization.

The orchestrator mainly provides strategy management (restriction strategy, evaluation strategy) and workflow mechanism for the SDN controller.

An important function of the SDN controller is to perform path calculation and manage paths, and finally complete path delivery.

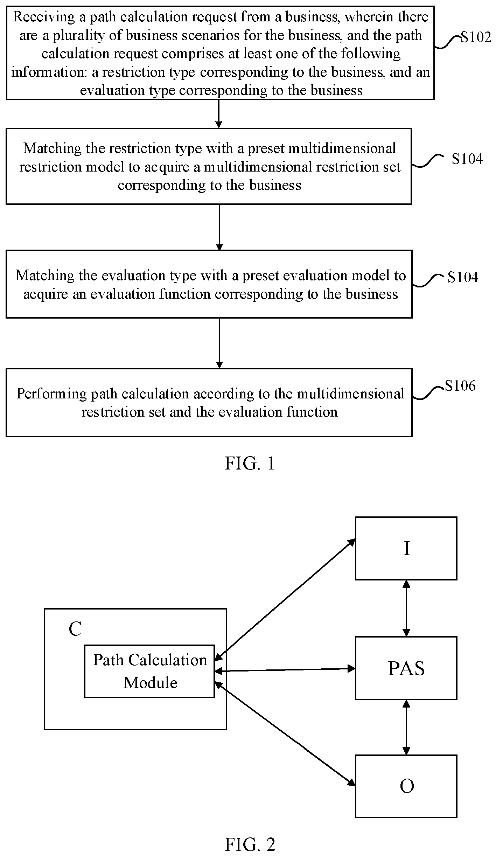

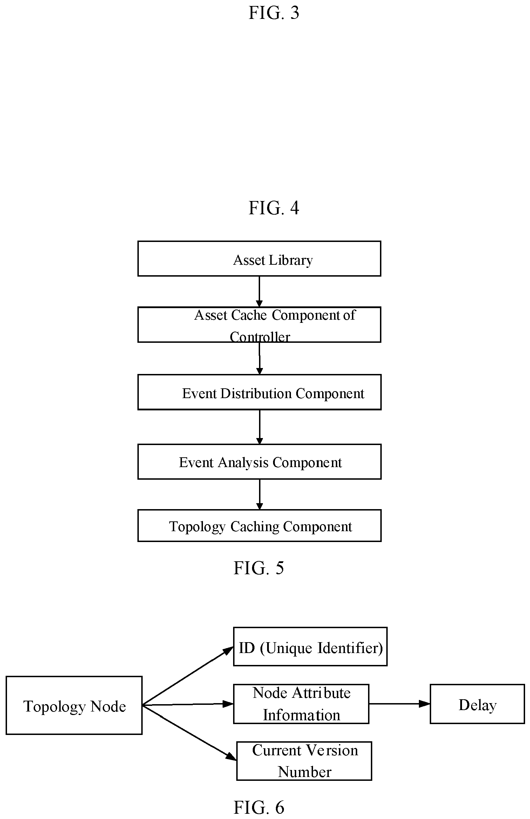

In this embodiment, a path calculation method under multidimensional restriction is provided. FIG. 1 is a flowchart illustrating the path calculation method under multidimensional restriction according to an embodiment of the present disclosure, the method is performed based on a SDN network. As shown in FIG. 1, the process comprises the following steps:

At step S102, a path calculation request from a business is received. The business comprises a plurality of business scenarios, and the path calculation request comprises at least one of the following information: a restriction type corresponding to the business and an evaluation type corresponding to the business.

It should be noted that there may be a plurality of restriction types and a plurality of evaluation types.

At step S104, the restriction type is matched with a preset multidimensional restriction model to acquire a multidimensional restriction set corresponding to the business.

At step S106, the evaluation type is matched with a preset evaluation model to acquire an evaluation function corresponding to the business.

At step S108, path calculation is performed according to the multidimensional restriction set and the evaluation function.

In an embodiment, the above steps may be executed by the SDN controller, etc., but it is not limited thereto.

It should be noted that the above-mentioned preset multidimensional restriction model includes at least one of the following: tenant identification ID, and the multidimensional restriction set; and the preset evaluation model includes at least one of the following: next-hop evaluation for a network topology, and edge cost evaluation for each edge in the network topology.

Through the above steps S102 to S108, a path calculation request from a business is received, wherein there are a plurality of business types, and the path calculation request comprises at least one of the following information: a restriction type corresponding to the business, and an evaluation type corresponding to the business; a match of the restriction type with a preset multidimensional restriction model is performed to acquire a multidimensional restriction set corresponding to the business; a match of the evaluation type with a preset evaluation model is performed to acquire an evaluation function corresponding to the business; and path calculation is performed according to the multidimensional restriction set and the evaluation function. That is to say, path calculation could be performed in any business scenario by decoupling the business from the path calculation (namely, by separating the business module from the SDN controller), thus solving the following problems in the prior art: the business module and the path calculation module of the SDN controller are coupled with each other, which cannot be adapted to expansion and change to new business scenarios; and the path calculation module cannot be used as an independent component to other business scenarios, such that the operating efficiency of the SDN controller is low. At the same time, any restriction set may be constructed by the multidimensional restriction model without closely associating the restrictions with the business, and thus the restriction set can be fully expanded to satisfy the requirements of complex business restriction in the future, so as to solve the problem that the path calculation performance has a bottleneck, and achieve the technical effect of network-wide resource optimization.

The present embodiment will be illustrated in the following with reference to examples.

In this example, a method for providing optimal path calculation strategy under multidimensional restriction is provided based on the SDN network, which decouples the business application from path calculation algorithm and decouples asset information storage from the controller core, thus solving the problem that the SDN controller has a low operating efficiency and the path calculation performance has a bottleneck. At the same time, construction of a multidimensional restriction model and evaluation model is performed by taking data analysis optimization results obtained from the performance analysis system as the basis for path calculation and by using the strategy. The multidimensional restriction set is decoupled from a traversal algorithm and the optimal path evaluation is decoupled from the traversal algorithm by analyzing the multidimensional restriction model and injecting the evaluation function and by using a workflow mechanism; at the same time, the construction of multidimensional restriction model solves the problem that the optimal path calculation under multidimensional restriction cannot be applied flexibly in complex business scenarios, thereby achieving optimization of network-wide resources.

In an embodiment, the method for providing optimal path calculation strategy under multidimensional restriction in this example comprises the following steps:

At Step S11, the performance analysis system finely analyzes and optimizes the performance data, and provides the optimization results to the strategy module of the orchestrator and the path calculation module of the controller;

At Step S12, the orchestrator provides strategy management, constructs a multidimensional restriction model, and constructs an evaluation model;

At Step S13, the controller provides a context switching entry, drives the path calculation flow by using the workflow mechanism, and links with the orchestrator; the controller also performs adaptation before path calculation search, including: analyzing the multidimensional restriction model, adapting a search algorithm, selecting a return path type, and performing scenario switching detection;

At Step S14, the controller performs scenario adaptation during the path calculation search process, including: searching and calculating paths, injecting an evaluation model, and performing scenario switching detection;

At Step S15, the controller performs scenario adaptation after the path calculation search ends, including: analyzing and caching paths, performing scenario switching detection, and delivering the path to the device.

The application of the embodiments of the present disclosure has the following advantages.
1) Through the asset library, the business application strategy is decoupled from the path calculation inside the controller, and the operating efficiency of the controller can be greatly improved by means of asynchronous remote call, distribution, etc.
2) The performance analysis system provides basic performance data for path calculation by analyzing and optimizing the refined resources of the business, thus solving the currently existed problem that the network becomes more and more complex in the future, but the resource utilization is insufficient, and thereby realizing a more rational network resource plan.
3) The application selects an optimal node for the next hop by performing business strategy adaptation, constructing a restriction model, and constructing and injecting evaluation model, which meets the needs from flexible and changeable business scenarios and makes the controller to control the network more easily;
4) The controller switches the context scenarios by changing the application scenario of the adapted strategy, and thus the topology information can be updated and the recalculation mechanism is triggered in time, which can prevent and control poor user experience caused by network shock timely;
5) The controller reduces the convergence time of the optimal path calculation by providing a general search algorithm for path under multidimensional restriction, which fully satisfies the path calculation under any restriction set, making the controller to plan and manage the path more conveniently.

In one embodiment, the above method further comprises the following step before performing the path calculation according to the multidimensional restriction set and the evaluation function:
At step S21, a network topology model is constructed, wherein, the network topology model comprises at least one of the following information: a topology node set, a topology link set, and a tenant set.

In an embodiment, the above method further comprises the following steps:
At step S31, it is detected whether the network topology information is changed;
At step S32, the network topology model is updated when detecting that the network topology information is changed.

Through steps S31 to S32, the network topology model can be updated in time, which meets the needs from flexible and changeable business scenarios.

In one embodiment, performing the path calculation according to the multidimensional restriction set and the evaluation function comprises the following steps:
At step S41, the multidimensional restriction set is injected during traversal of the network topology graph model;
At step S42, the multidimensional restriction set is applied in a next-hop selection process for the network topology model, and the evaluation function is injected in the next-hop selection process and an edge cost selection process for the network topology model to realize the path calculation.

Through the above steps S41 to S42, the problem that the path calculation performance has a bottleneck is solved, and the technical effect of network-wide resource optimization is achieved.

In an embodiment, the above method further comprises the following step before performing path calculation according to the multidimensional restriction set and the evaluation function:
At step S51, an algorithm corresponding to the path calculation is searched, wherein the algorithm comprises at least one of the following: top K optimal paths (TopK) algorithm under multidimensional restriction, share risk link group (SRLG) algorithm under multidimensional restriction, and shortest active-standby separation path algorithm under multidimensional restriction.

In an embodiment, the above method further comprises:
At step S61, it is detected whether the business is changed in real time;
At step S62, the algorithm corresponding to the path calculation is re-searched when the business is changed.

Through the above steps S61 to S62, the path calculation algorithm can be updated in time according to change of the business.

In one embodiment, the above method further comprises the following step before performing the path calculation according to the multidimensional restriction set and the evaluation function:
At step S63, resource information optimized by a performance analysis system is received, and the resource information is used for the path calculation.

Through the above step S63, the performance analysis system provides basic performance data for path calculation by analyzing and optimizing the refined resources of the business, thus solving the currently existed problem that the network becomes more and more complex in the future, but the resource utilization is insufficient, and thereby realizing a more rational network resource plan.

In one embodiment, the above method further comprises delivering a calculation result of the path calculation.

The present embodiment will be illustrated in the following with reference to the example.

FIG. 2 illustrates the interaction relationship among the SDN controller, the performance analysis system, the orchestrator, and the asset library, which comprises:
1) The performance analysis system performs data communication with the asset library through an independent interface. The performance analysis system collects, calculates, and analyzes the asset data, and returns the optimized results to the orchestrator and the controller.
2) The strategy module of the orchestrator communicates with the performance analysis system through an independent interface to obtain optimized data, and then apply the optimized data to strategy management.
3) The path calculation module of the controller communicates with the performance analysis system through an independent interface to obtain optimized data, and then apply the optimized data to the path calculation.
4) The controller performs data communication with the asset library through an independent interface and performs internal cache on the assets and thus preparing for construction of a global topology network model.
5) The controller communicates with the strategy module of the orchestrator through an independent interface, so that the controller is provided with strategy for the path calculation; and the controller performs path calculation according to the strategy.

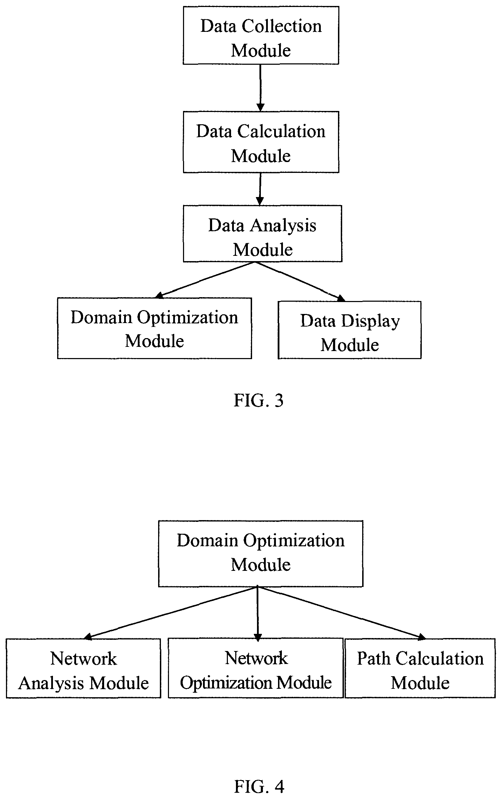

The internal structure of the performance analysis system is shown in FIG. 3, and it includes the following modules:
1) Data collection module configured to collect, through the asset library, network resources at a network level where the performance analysis system is located;
2) Data calculation module configured to aggregate and calculate data in time dimension and resource dimension, according to the data collected by the data collection module;
3) Data analysis module configured to analyze data required by the user in time dimension, resource dimension and user-defined dimension, according to the data calculated by the data calculation module;
4) Data display module configured to display data in a variety of dimensions in the form of chart, according to the analysis data obtained by the data analysis module, the data display module also supports export and editing;
5) Domain optimization module configured to obtain an optimization strategy according to the analysis data obtained by the data analysis module, and report the strategy to the corresponding orchestrator, the strategy including network analysis, network optimization, and path calculation.

The structure of the domain optimization module is shown in FIG. 4, including: a network analysis module, a network optimization module and a path calculation module.

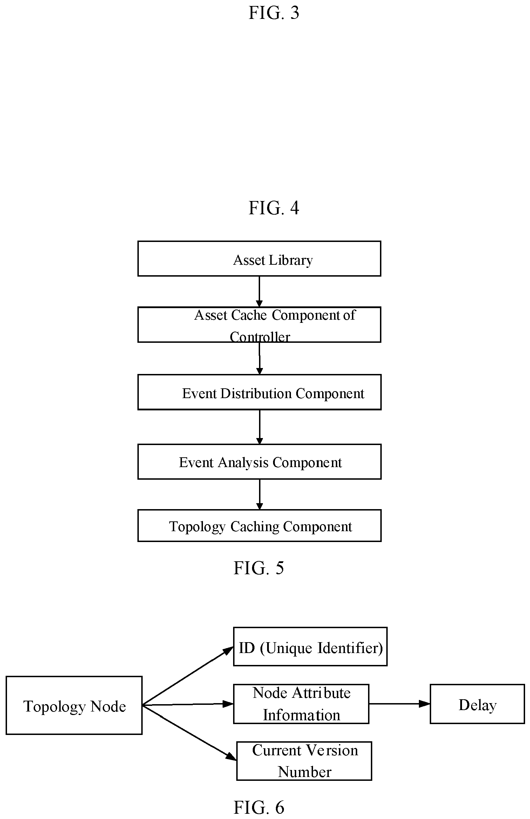

FIG. 5 to FIG. 8 illustrate the information of each package and the relationship among the packages during constructing process of the CIM network-wide abstract topology model, according to this embodiment.

FIG. 5 illustrates relationship among the components for topology information collection. FIG. 5 mainly illustrates the source and destination for the topology information collection and the topology information is cached to provide topology for path calculation. The functions of the components are illustrated as follows:
1) The asset library is configured to provide asset data through an external interface of the asset library;
2) The asset cache component of the controller is configured to cache the asset data inside the controller;
3) The event distribution component is configured to send events to notify that there is a change in topology information in the current network, such as node change, link change, and tenant change;
4) The event analysis component is configured to analyze the current topology event, analyze and extract useful information, so as to prepare for topology caching.
5) The topology caching component is provided with basic attribute information by the asset data, and it is configured to dynamically construct a topology model for CIM abstract network, and cache the topology information of nodes, links and tenants in the topology model, so as to prepare topology model data for the search business.

FIG. 6 illustrates information packages for topology nodes of abstract network according to this embodiment. The node abstract information comprises ID, current version number, and attribute information related to node calculation. The node ID is a globally unique node ID identifier in the network-wide abstract model; information on the version number is mainly used to determine whether the network node is changed, and when a node is changed (which mainly refers to that the node goes online and offline), the previously distributed information may be invalid; the attribute information mainly includes extracted attributes related to the search calculation, such as delay information, and it is mainly used for a calculation service for path prioritizing.

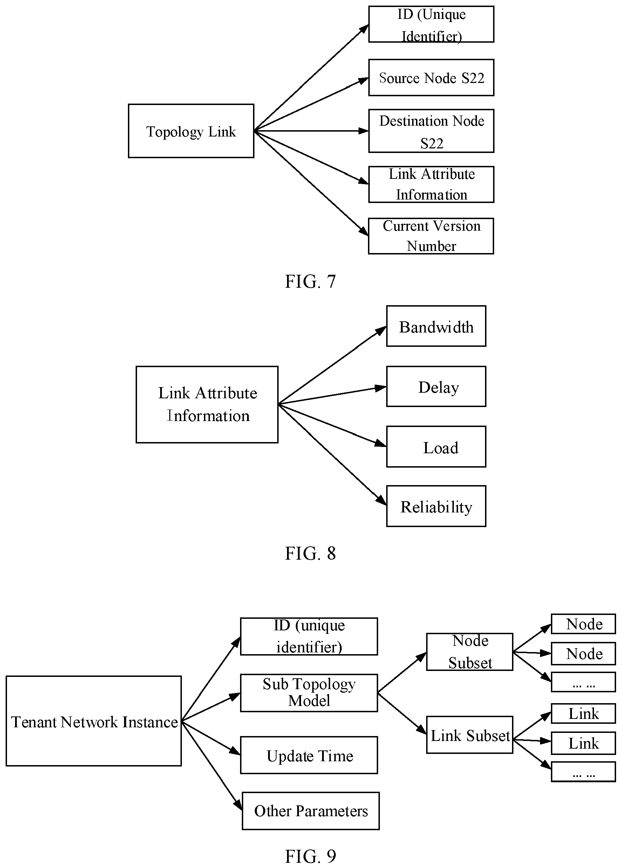

FIG. 7 and FIG. 8 illustrate information packages for links of the abstract network according to this embodiment, which mainly illustrate the link abstract information in the model as follows.

The topology link extraction information comprises ID, current version number, source node (incoming node), destination node (outgoing node), and attribute information. First, the link ID is a globally unique node ID identifier in the network-wide abstract model. For links with the same source node and the same destination node, different link IDs indicate different links. Therefore, it is possible to distinguish multiple links mapped by different ports (physical or logical) of two physical nodes, without extracting port information. Secondly, the source node and the destination node are the information extracted in FIG. 6. In addition, information on the version number is mainly used to determine whether the network link is changed (which mainly refers to link discovery, link disconnection, attribute value change, etc.), and when the related link is changed, the previously distributed information may be invalid.

Link attribute information mainly includes extracted attributes related to search calculation, such as bandwidth related information (bandwidth capacity, occupied bandwidth, bandwidth utilization, etc.), delay, load, reliability and other related information. The link attribute information is mainly used for path selection calculation business.

FIG. 9 illustrate a topology instance model for abstract network of a common information model (CIM) actually used by the tenant according to this embodiment. The model comprises: tenant ID, change time, sub-topology model and other parameters. First, the tenant ID is a globally unique identifier for different tenants; second, the change time mainly indicates time recorded when the topology changes; third, the sub-topology model mainly comprises node subset and link subset for a network-wide topology, which are the local references to the network-wide node set and link set, respectively; finally, other parameters mainly comprises other information of some users, such as the number of nodes, the number of links and other reference information.

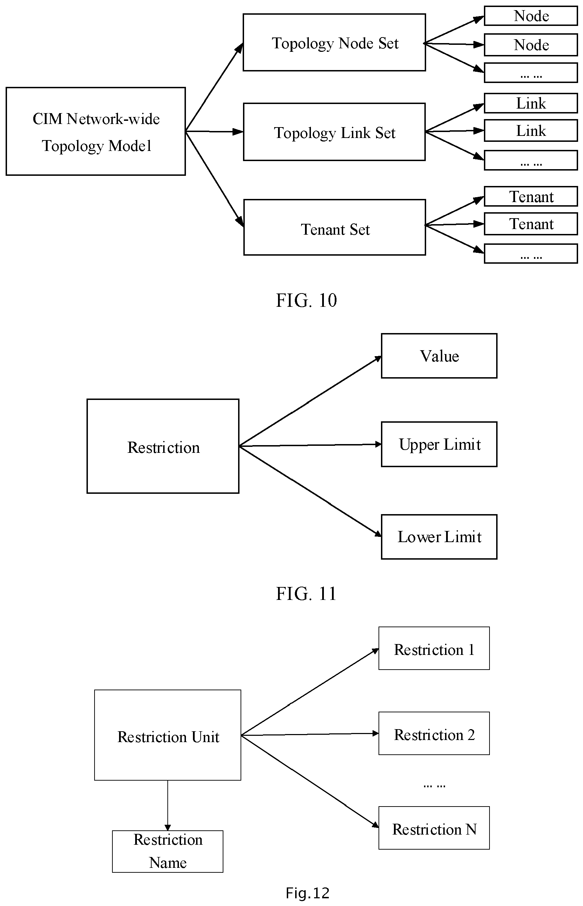

FIG. 10 illustrates an abstract topology model for network-wide CIM according to this embodiment. The model mainly provides information required by the abstract topology network, caches the information, and provides a data model basis for the topology search service and the upper-layer business model. The information mainly comprises a node set, a link set, and a tenant set. First, the node set is the network-wide node information set shown in FIG. 6. Second, the link set is the network-wide link information set shown in FIG. 7. Finally, the tenant set is the topology instance set (tenant set) as shown in FIG. 9.

FIG. 11 to FIG. 14 illustrate a restriction model construction provided for the business set of the strategy module in the orchestrator according to the present disclosure. The restriction set construction provided for any business requirements adapts to the complexity, flexibility and variability of the business scenarios. At the same time, it provides a restriction analysis entry for the topology search service for restriction processing in the search process. The contents are as follows.

FIG. 11 illustrates a basic information package with a single restriction according to this embodiment; the package mainly comprises the following three objects: a restriction value, a restriction upper limit and a restriction lower limit, and it is mainly used to describe basic information of the single restriction. In practice, all business restrictions may be actually described by one of or a combination of these three items. For example, the bandwidth utilization is described by the upper and lower limits; and the number of hops, delay, designated points, etc. may be described by the restriction value.

FIG. 12 illustrates an information package for the restriction unit according to this embodiment. The package mainly comprises restriction name and restriction value set. In practice, a restriction unit, such as the designated point set, will comprise multiple node sets; and for example, a designated link set comprises multiple link sets. Therefore, it is necessary to describe the restriction unit by the restriction value set shown in FIG. 11, and the restriction unit has to provide a name to identify the meaning of restriction.

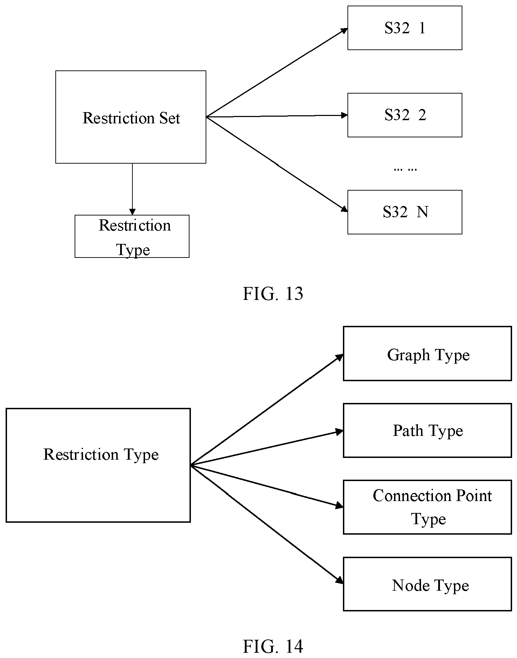

FIG. 13 to FIG. 14 illustrate an information package for the restriction set according to the present disclosure. The package mainly comprises restriction type and the restriction unit (shown in FIG. 12) set. In practice, when the business has a path calculation request, it is necessary to know in advance the tenant (ID) that has the request, the restriction conditions (restriction unit set) that are included in the path calculation request of the tenant, and the type of restriction of these restriction conditions are (restriction type, as shown in FIG. 14). The restriction type is mainly used for path calculation search business, and it is configured to determine an identifier of acting point of restriction. For example, the Graph type restriction is mainly used for path calculation process, such as the hop limit of all nodes in the path, delay limit, business application bandwidth, and bandwidth utilization limit, list of designated points, list of designated links, list of avoidance points, list of avoidance links, etc. The Path type restriction is mainly used for path management and optimization; for example: TopK path, SRLG active-standby path, active-standby separation path, equivalent balanced path, etc. The Node type restriction and the Connection type restriction (such as delay, bandwidth, load, reliability, etc.) are mainly used for the node traversal prioritizing process.

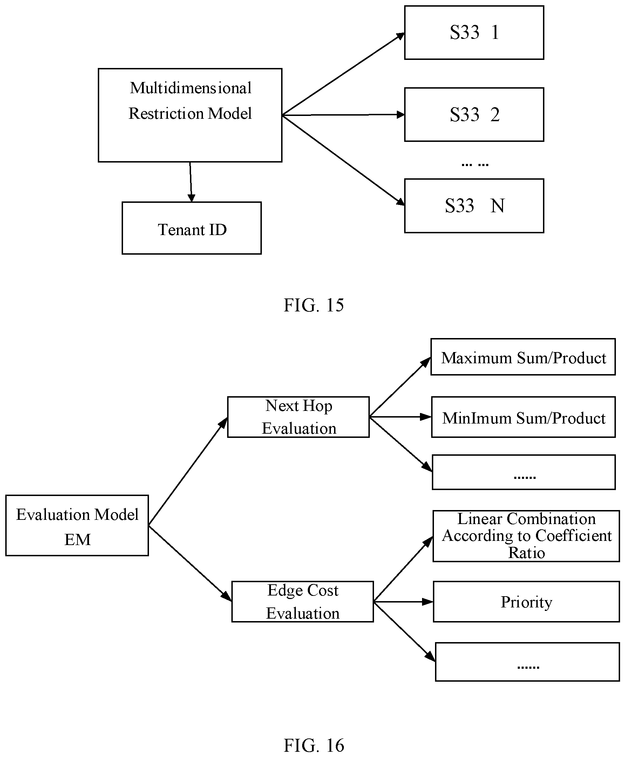

FIG. 15 illustrates a multidimensional restriction model (MRM) according to this embodiment. The MRM model is mainly composed of tenant ID and multidimensional restriction set (S33). In practice, when the business has a path calculation request, it is necessary to know in advance the tenant (ID) that has the request and the dimension (restriction type) for the restriction set included in the path calculation request of the tenant. Multidimensional (type) restriction is shown in FIG. 14.

FIG. 16 illustrates an evaluation model according to this embodiment. The evaluation model (EM) is mainly used for evaluation function construction under any business requirement, it adapts to complexity, flexibility and variability of business scenarios and is configured to inject the evaluate function in the search process. In practice, the next evaluation is used to construct a cost calculation function for each edge in the topology. The edge calculation comprises acquiring respective considered index on the edge according to the priority thereof; each considered index may also be arranged and combined according to a certain coefficient ratio; and the edge calculation may also be constructed for other business requirements. The edge cost evaluation is used to construct for topology calculation a function for selecting a next-hop node. The next-hop node may have a minimum sum or a minimum product, or a maximum sum or a maximum product. Alternatively the function may be constructed according to actual business requirements.

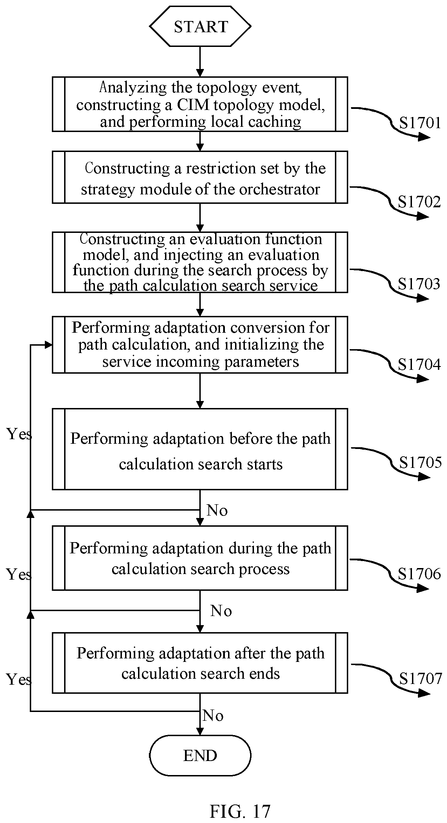

FIG. 17 is a flowchart illustrating a workflow mechanism for path calculation search service according to this embodiment, which mainly comprises analyzing a topology event, locally caching the topology, constructing a business restriction model by the strategy module of the orchestrator, constructing a business evaluation model by the strategy module of the orchestrator, adapting before the path calculation search starts, adapting during the path calculation search, and adapting after the path calculation search ends. Specifically, it includes:
At step S1701, the topology event is analyzed, a CIM topology model is constructed, and the local caching is performed.

At step S1702, a restriction set is constructed by the strategy module of the orchestrator.

When the strategy module of the orchestrator collects a calculation request from the business, the restriction set is constructed according to business requirements in a way for constructing the restriction model.

At step S1703, an evaluation function model is constructed, and an evaluation function is injected by the path calculation search service during the search process.

When the strategy module of the orchestrator collects a calculation request from a business, an evaluation function model is constructed according to the business requirements, and the evaluation function is injected by the path calculation search service during the search process.

At step S1704, adaptation conversion for path calculation search is performed, and the business incoming parameters are initialized.

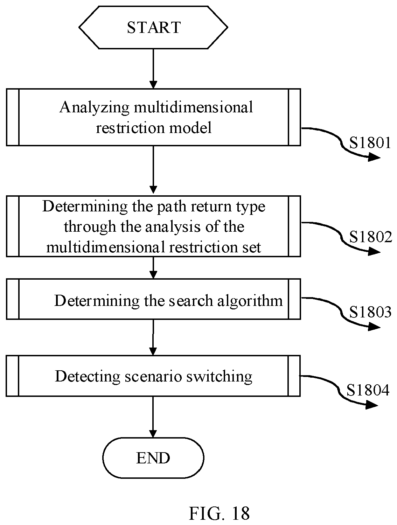

At step S1705, adaptation is performed before the path calculation search, as shown in FIG. 18, the flow comprises steps S1801 to S1804.

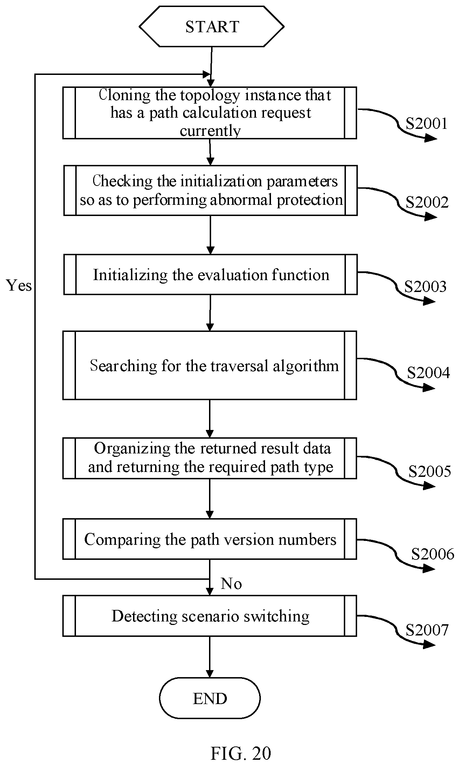

At step S1706, adaptation is performed during the path calculation search, as shown in FIG. 20, the flow comprises steps S2001 to S2007.

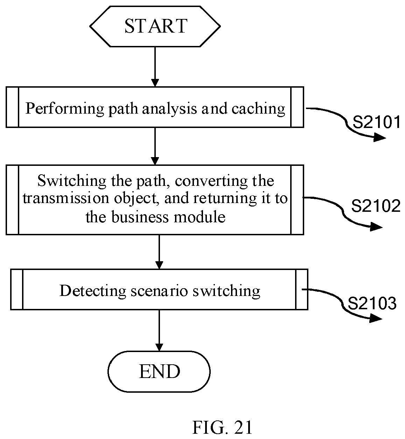

At step S1705, adaptation is performed after the path calculation search ends, as shown in FIG. 21, the flow comprises steps S2101 and S2103.

FIG. 18 is a flowchart illustrating adaptation before the path calculation search algorithm starts according to this embodiment. The implementation steps include:

At step S1801, multidimensional restriction model is analyzed.

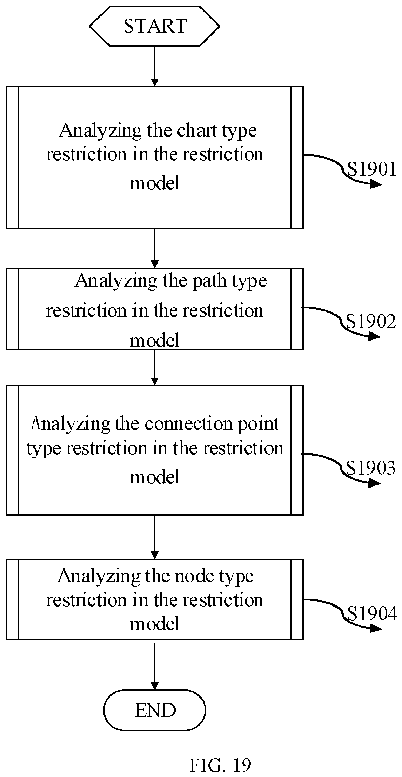

Before the path calculation search algorithm starts, it is necessary to adapt with the business request before the search. First, the restriction model needs to be analyzed. The analysis process is shown in FIG. 19, which includes steps S1901 to S1904.

At step S1802, a path return type is determined through the analysis of the multidimensional restriction set.

The path types mainly comprise an optimal path, an equivalent balanced path, a TopK path, a SRLG (share risk link group) active-standby path, and an optimal separation active-standby path.

At step S1803, the search algorithm is determined.

In addition to the path return type, it may also be necessary to determine the search algorithm. The search algorithm mainly comprises: a general search algorithm, a SRLG algorithm, and a separation path algorithm.

At step S1804, scenario switching detection is performed.

When the adaptation before the search is completed, it is necessary to detect the scenario change at this time, for example, the topology has been changed and the business request has been changed. The scenario change directly affects the execution of the subsequent steps, including: re-executing the adaptation before the search, directly ending and returning, and performing the subsequent process.

FIG. 19 is an analysis flow for related parameters under different restriction types according to this embodiment. The related parameters mainly comprise Graph type restriction parameters, Path type restriction parameters, Connection type restriction parameters, and Node type restriction parameters. The analysis of all restrictions is adapted by the configuration name. Each restriction analysis only analyzes a multiple restriction set contained in the current request.

The multidimensional restriction model analysis is mainly used for a search algorithm and it injects restriction conditions into the algorithm. The implementation steps are as follows:
At step S 1901, the graph type restriction in the restriction model is analyzed.

It mainly includes analyzing hop limit, delay limit, requested bandwidth capacity, and upper and lower limits for bandwidth utilization, list of designated points, list of designated links, list of avoidance points and list of avoidance links.

At step S1902, the path type restriction in the restriction model is analyzed.

It mainly includes analyzing the return type of the path.

At step S1903, the connection point type restriction in the restriction model is analyzed.

Weights, bandwidth utilization, bandwidth capacity, load, reliability and delay are included herewith. Herein, data for Connection type restriction and data for Node type restriction in step S1904 are mainly provided by third parties such as cache or database, and the topology service and the business module share third-party resources. This can fully reduce impact from calculation result failure caused by the data update; at the same time, the business module does not need to prepare data for the topology module, which also improves the operating efficiency of the controller.

At step S1904, the node type restriction in the restriction model is analyzed.

The analysis herein includes analyzing objects containing node restriction, such as delay; the data thereof is provided by the cache or database.

FIG. 20 illustrates an adaptation flow in the path calculation search process according to this embodiment. The implementation steps are as follows:

At step S2001, an topology instance that has a path calculation request currently is cloned.

The cloning is performed for recording the currently calculated topology objects and version numbers of the link objects and node objects, so as to facilitate subsequent comparison on whether the topology is changed and whether the current calculation results are meaningful.

At step S2002, initialization parameters are checked so as to perform abnormal protection.

For example, it is detected whether the source node and target node for the path calculation is empty.

At step S2003, the evaluation function is initialized.

The initialization in this step is performed so as to prepare for searching for a traversal algorithm, and provide evaluation criteria for node and link selection.

At step S2004, the traversal algorithm is searched.

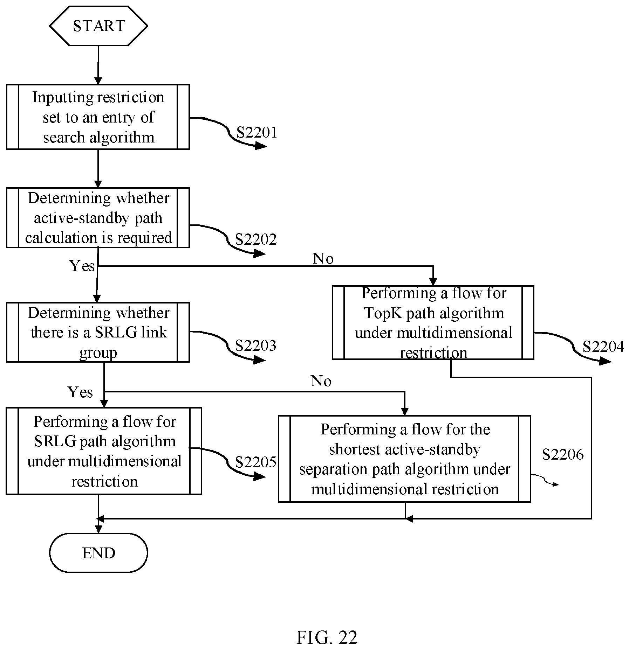

The traversal algorithm search process is performed (see step S2201-step S2206 in FIG. 22 below), costs from the source point to all nodes are calculated, and data for the optimal path is organized to return.

At step S2005, the returned result data is organized and a required path type is returned.

At step S2006, comparison for path version numbers is performed.

The version numbers of the link and node lists in the return path are compared to find out whether there is a change in the link or node of related path in the topology, and recalculation is needed to be performed if there is an influential change.

At step S2007, scenario switching is detected.

The scenario in the search process is detected, and when the scenario changes, corresponding result action is performed, including: ending the path calculation, re-executing the path calculation, and proceeding steps in the flow.

FIG. 21 illustrates an adaptation flow after the path calculation search process ends according to this embodiment. The implementation steps are as follows:

At step S2101, path analysis and caching is performed.

After the execution of the search algorithm is completed, the path is analyzed and cached. When the number of nodes is small, path redundancy calculation is performed.

At step S2102, the paths is switched and converted into a transmission object, and then returned to the business module.

The path is composed of a list of links, and the links exist in the topology search business module in the form of a dedicated abstract object. The link may be physical or logical, so it is necessary to perform a certain conversion. In order to reduce transmission consumption among modules, the path is transmitted through the link ID identification list before the path is delivered.

At step S2103, scenario switching is detected.

The scenario is detected after the search ends, and when the scenario changes, a corresponding result action is performed, i.e. recalculating the path and proceeding steps in the flow.

FIG. 22 illustrates a flow for the traversal algorithm according to this embodiment. As shown in FIG. 22 to FIG. 26, the traversal algorithm mainly comprises the following algorithms: TopK algorithm under multidimensional restriction, SRLG algorithm under multidimensional restriction, shortest separation path algorithm under multidimensional restriction, and optimal path algorithm under multidimensional restriction. The implementation steps comprise:

At step S2201, the restriction set is input to an entry of the search algorithm.

The multidimensional restriction set parameters are provided from the above steps and input to the entry of the search algorithm;

At step S2202, it is determined whether an active-standby path calculation is required.

It is determined whether the active-standby path calculation is required according to the path restriction parameters; and if the active-standby path calculation is not required, a flow for the TopK path algorithm under multidimensional restriction S2204 is entered.

At step S2203, it is determined whether there is a SRLG link group.

If an active-standby path is required, it is determined whether there is a SRLG share risk link group; and if there is a SRLG link group, a flow for the SRLG algorithm under multidimensional restrictionS2203 is entered; otherwise, a flow for the shortest separation path algorithm under multidimensional restriction S2206 is entered;

At step S2204, a flow for the TopK path algorithm under multidimensional restriction is performed.

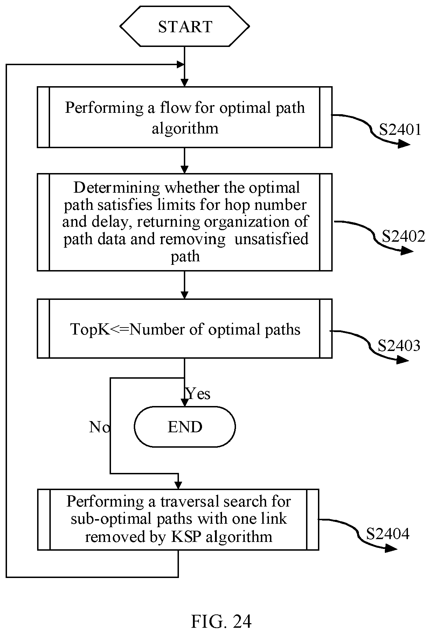

Reference may be made to step S2401 to step S2404 in FIG. 24.

At step S2205, a flow for the SRLG algorithm under multidimensional restriction is performed.

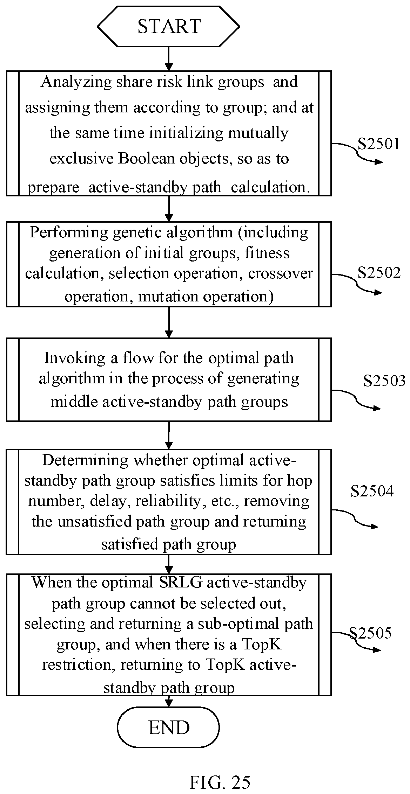

Reference may be made to step S2501 to step S2505 in FIG. 25.

At step S2206, a flow for the optimal active-standby separation path algorithm under multidimensional restriction is performed.

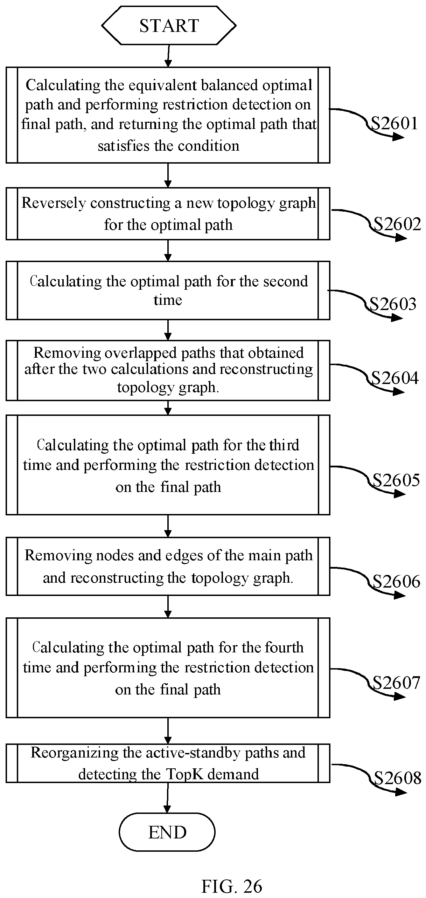

Reference may be made to step S2601 to step S2608 in FIG. 26.

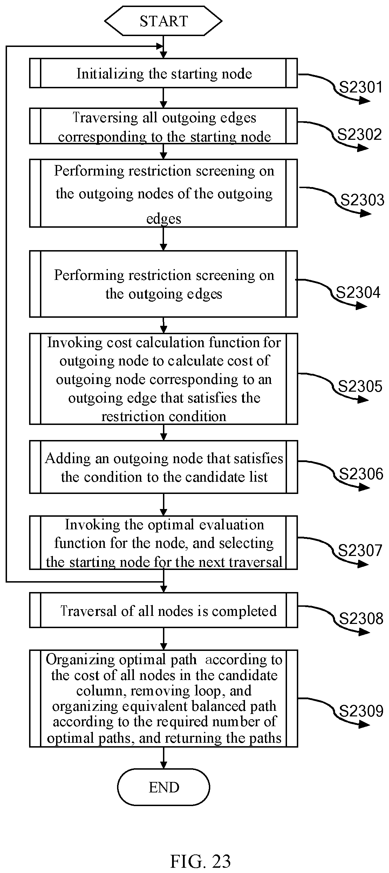

FIG. 23 illustrates a flow for optimal path algorithm according to this embodiment, it mainly provides a calculation for optimal path and an equivalent balanced path for other algorithm flows. The implementation steps comprise:

At step S2301, a starting node is initialized.

In order to prepare for performing traversal search on a topology graph for which an optical path is to be calculated, first, initialization is performed on current traversal nodes (a node that the traversal is performed firstly is the source node);

At step S2302, all outgoing edges corresponding to the starting node are traversed.

At step S2303, restriction screening is performed on outgoing nodes of the outgoing edges.

Restriction screening is performed on outgoing nodes of the outgoing edges, which mainly includes determining whether an outgoing node has a delay limit and whether it is an avoidance point or a designated point. Outgoing nodes that do not satisfy the restriction and the corresponding edges thereof are added to an exclusion list; the nodes and edges in the exclusion list do not take part in next traversal election for optimal node.

At step S2304, restriction screening is performed on the outgoing edges.

Restriction screening is performed on the outgoing edges, which mainly includes determining whether an outgoing edge satisfy the restriction conditions, such as restriction conditions on bandwidth, bandwidth utilization, delay, load, reliability, avoidance edge list and designated edge list. The outgoing edges that do not satisfy the restriction and the corresponding outgoing nodes thereof are added to the exclusion list.

At step S2305, a cost calculation function for outgoing node is invoked to calculate cost of an outgoing node corresponding to the outgoing edge that satisfies the restriction condition.

An evaluation function injected by the user is invoked, and the cost calculation function for outgoing node is required herewith (the cost calculation function is generally a combination of linear functions or priority arrangement, herein, the user may most flexibly select the way for injecting the evaluation function). The cost from an origin node to the current outgoing node in a non-exclusion list is calculated.

At step S2306, the outgoing node that satisfies the restriction condition is added to a candidate list.

The outgoing node that satisfies the restriction condition and the corresponding cost thereof are add to the candidate list, or the candidate list is updated.

At step S2307, an evaluation function for optimal node is invoked, and the starting node for the next traversal is selected.

An evaluation function for selecting optimal node injected by the user is invoked (the evaluation function may be configured for selecting a sum minimum, a product minimum, or a maximum or minimum value, etc., herein, the user may most flexibly select the way for injecting the evaluation function), and a starting node for the next traversal is selected. If all nodes have been traversed, the flow proceeds to step S2308; otherwise, the flow proceeds to step S2301.

At step S2378, traversal for all nodes is completed.

At step S2379, optimal paths are organized according to the cost (fee) of all nodes in the candidate list, loops are removed therefrom, and equivalent balanced path is formed according to the required number of optimal paths, and then the paths (a group of paths) are returned and the algorithm flow ends.

FIG. 24 illustrates a search flow for a general optimal path algorithm under multidimensional restriction according to this embodiment, that is, the TopK optimal path algorithm under multidimensional restriction. Herein, the default value for TopK is 1, that is, only one or more equivalent balanced paths are returned. The implementation steps are as follows:

At Step S2401, a flow for optimal path algorithm is performed.

First, one or more equivalent balanced optimal paths are searched, see steps S2301 to S2309 above for details.

At Step S2402, it is determined whether the optimal path satisfies limits for the hop number and delay, an organization of the path data is returned with the unsatisfied path removed.

It is determined whether the optimal path (a group of the optimal paths) satisfies the limits for the hop number, delay and reliability; the unsatisfied path is removed, and the path satisfying the condition is returned. The data for the path that satisfies the condition is reorganized, and the flow proceeds to the next step S2403;

At Step S2403, it is determined whether TopK is less than or equal to the number of returned optimal paths, and if it is greater than the number of returned optimal paths, the flow proceeds to the next step S2404; otherwise, the algorithm flow ends.

At Step S2404, a traversal search for sub-optimal path is performed with one link removed by KSP algorithm.

By using the KSP algorithm, one link is removed from the source point and the traversal search for sub-optimal path is performed, that is, the topology graph is changed and then the steps S2401 to S2404 are repeated.

FIG. 25 is a flowchart illustrating a SRLG share risk link group active-standby path search algorithm under multidimensional restriction according to an embodiment. The share risk link group refers to that, when there is a fault in one link among all links in the same group, the other links will be disconnected. Therefore, when performing calculation on the active-standby paths, all links belonging to the same risk group are on one link. That is, the active path and standby path will include links belonging to the same risk group. The implementation steps are as follows:
At Step S2501, the risk link groups are analyzed and assigned according to the group. At the same time, the mutually exclusive Boolean objects are initialized, which are used to distinguish the active-standby path risk group in the following process for genetic algorithm.
At step S2502, the genetic algorithm is performed (including generation of initial population, fitness calculation, selection operation, crossover operation, mutation operation).
At step S2503, middle active-standby path groups are generated and the flow for invoking the optimal path algorithm is invoked;
   The flow for invoking the optimal path algorithm is performed in the process of generating the middle active-standby path groups in the genetic algorithm, as shown in FIG. 23, step S2301 and step S2309;
At step S2504, it is determined whether the optimal active-standby path group satisfies the limits for hop number, delay, reliability, etc., and then the unsatisfied path group is removed and the satisfied path group is returned;
At step S2505, when the optimal SRLG active-standby path group cannot be selected out, a sub-optimal path group is selected and returned; and when there is a TopK restriction, r the TopK active-standby path group is returned, then the algorithm flow ends.

FIG. 26 illustrates a flow for active-standby separation path algorithm under multidimensional restriction according to the present disclosure; the implementation steps are as follows:
At step S2601, the equivalent balanced optimal path is calculated and restriction detection is performed on a final path, and then the optimal path that satisfies the condition is returned.

By using the optimal path algorithm under multidimensional restriction (steps S2301to S2309), one or more equivalent balanced optimal paths are calculated, and the restriction detection (hop number, delay, reliability, etc.) is performed on the final path, and then the optimal path (a group of the optimal paths) that meets the condition is returned, and the steps of the flow are repeated.

At step S2602, a new topology graph is reversely constructed for the optimal path under multidimensional restriction.

A suurballe algorithm may be used here.

At step S2603, the optimal path is calculated for the second time.

The optimal path (a group of the optimal paths) is calculated for the second time by the flow for the optimal path algorithm under multidimensional restriction and then the flow are repeated;
At step S2604, the overlapped paths that obtained after the two calculations are removed and the topology graph is reconstructed.

At step S2605, the optimal path is calculated for the third time, and the restriction detection is performed on the final path.

The optimal path (a group of the optimal paths) is calculated for the third time by the flow for the optimal path algorithm under multidimensional restriction and restriction detection (hop number, delay, reliability, etc.) is performed on the final path. This path (the group of the optimal paths) is the active path; then the flow is repeated.

At step S2606, the nodes and edges of the main path are removed and the topology graph is reconstructed.

At step S2607, the optimal path is calculated for the fourth time, and the restriction detection is performed on the final path.

The optimal path (a group of the optimal paths) is calculated for the third time by the flow for the optimal path algorithm under multidimensional restriction and restriction detection (hop number, delay, reliability, etc.) is performed on the final path. This path (the group of the optimal paths) is the standby path; then the flow is repeated.

At step S2608, the active-standby paths are reorganized and it is detected if there is a demand on TopK, and when there is a demand on TopK, the TopK active-standby paths are returned, and the algorithm flow ends.

Through description of the above embodiments, those skilled in the art can clearly understand that the method according to the above embodiments can be implemented by means of software plus a necessary general hardware platform ;of course, it can also be implemented by hardware, but in many cases the former one is a preferable implementation. Based on such understanding, the technical solutions of the present disclosure in essence or a part thereof contributing to the related art can be embodied in the form of software product. The computer software product is stored in a storage medium (such as ROM/RAM, magnetic disk, and optical disk) and comprises several instructions to enable a terminal device (may be a mobile phone, computer, server, or network device, etc.) to execute the method described in the embodiments of the present disclosure.

An embodiment of the present disclosure also provides a path calculation device under multidimensional restriction. The device is configured to implement the above-mentioned embodiments, and those that have already been described will not be repeated. As described below, the term "module" may implement a combination of software and/or hardware that performs predetermined functions. Although the devices described in the following embodiments are preferably implemented in software, the devices may also be implemented by hardware or a combination of software and hardware.

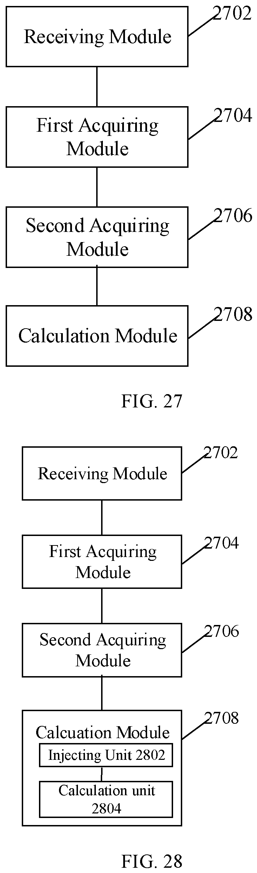

FIG. 27 is a structural block diagram illustrating the path calculation device under multidimensional restriction according to an embodiment of the present disclosure. As shown in FIG. 27, the device comprises:
1) a receiving module 2702 configured to receive a path calculation request from a business, wherein there are a plurality of business scenarios for the business, and the path calculation request comprises at least one of the following information: a restriction type corresponding to the business, and an evaluation type corresponding to the business;
   It should be noted that there may be a plurality of restriction types and evaluation types.
2) a first acquiring module 2704 configured to match the restriction type with a preset multidimensional restriction model to acquire a multidimensional restriction set corresponding to the business;
3) a second acquiring module 2706 configured to match the evaluation type with the preset evaluation model to acquire an evaluation function corresponding to the business;
4) a calculation module 2708 configured to perform path calculation according to the multidimensional restriction set and the evaluation function.

It should be noted that the above-mentioned preset multidimensional restriction model comprises at least one of the following: tenant identification ID and the multidimensional restriction set; and the preset evaluation model comprises at least one of the following: next-hop evaluation for a network topology, and edge cost evaluation for each edge in the network topology.

Through the device shown in FIG. 27, a path calculation request from a business is received, wherein there are a plurality of business types, and the path calculation request comprises at least one of the following information: a restriction type corresponding to the business, and an evaluation type corresponding to the business; a match of the restriction type with a preset multidimensional restriction model is performed to acquire a multidimensional restriction set corresponding to the business; a match of the evaluation type with a preset evaluation model is performed to acquire an evaluation function corresponding to the business; and path calculation is performed according to the multidimensional restriction set and the evaluation function. That is to say, path calculation could be applied to any business scenario by decoupling the business from the path calculation (namely, by separating the business module from the SDN controller), thus solving the following problems in the prior art: the business module and the path calculation module of the SDN controller are coupled with each other, which cannot be adapted to expansion and change to new business scenarios; and the path calculation module cannot be used as an independent component to other business scenarios, such that the operating efficiency of the SDN controller is low. At the same time, any restriction set may be constructed by the multidimensional restriction model without closely associating the restrictions with the business, and thus the restriction set can be fully expanded to satisfy the requirements on complex business restriction in the future, so as to solve the problem that the path calculation performance has a bottleneck, and achieve the technical effect of network-wide resource optimization.

The present embodiment will be illustrated with reference to the following example.

This example also comprises a path search business device under multidimensional restriction for solving path calculation under multidimensional restriction, comprising the following modules:
A data extraction module configured to dynamically acquire topology information and cache the topology information to construct a CIM network-wide topology model;
A strategy adaptation module configured to analyze business scenarios and start the path calculation flow;
A restriction analysis module configured to analyze multidimensional restriction set and provide a restriction parameter set for path calculation;
An evaluation and analysis module configured to analyze the evaluation function, and provide methods for next-hop optimization and edge cost calculation;
A path calculation module configured to take the traversal idea as the basic principle, inject the multidimensional restriction set during the traversal process, such that the multidimensional restriction set can be used in the next hop selection process; and inject the corresponding evaluation function during the next hop selection and edge cost calculation process, and the evaluation function is selected according to the business strategy so that the optimal path calculation under multidimensional restriction is completed. The process is extended to the TopK algorithm under multidimensional restriction, the SRLG active-standby path algorithm under multidimensional restriction, and the shortest active-standby path separation algorithm under multidimensional restriction so as to complete the optimal path search under multidimensional restriction under different business requirements;
A path management module configured to manage the paths, and return the obtained path to the strategy module for delivery.

In one embodiment, the above-mentioned device further comprises: a construction module configured to construct a network topology model before performing the path calculation according to the multidimensional restriction set and the evaluation function, wherein the network topology model comprises at least one of the following information: a topology node set, a topology link set, and a tenant set.

In an embodiment, the above device further comprises: a detection module configured to detect whether the network topology information is changed; and an updating module configured to update the network topology model when detecting that the network topology information is changed. By using this device, the network topology model can be updated in time, which meets the needs from flexible and changeable business scenarios.

FIG. 28 is a structural block diagram illustrating the path calculation device under multidimensional restriction according to an embodiment of the present disclosure. As shown in FIG. 28, the calculation module 2708 comprises:
1) An injection unit 2802 configured to inject the multidimensional restriction set during traversal of the network topology graph model;
2) A calculation unit 2804 configured to apply the multidimensional restriction set in a next-hop selection process for the network topology model, and inject the evaluation function in the next-hop selection process and an edge cost selection process for the network topology model to realize the path calculation.

With the device of FIG. 28, the problem that the path calculation performance has a bottleneck is further solved, and the technical effect of network-wide resource optimization is achieved.

In an embodiment, the above device further comprises: a first search module configured to search for an algorithm corresponding to the path calculation before performing the path calculation according to the multidimensional restriction set and the evaluation function, wherein the algorithm comprises at least one of the following: top K optimal paths (TopK) algorithm under multidimensional restriction, share risk link group (SRLG) algorithm under multidimensional restriction, and shortest active-standby separation path algorithm under multidimensional restriction.

In an embodiment, the above device further comprises: a detection module configured to detect in real time whether the business is changed; and a second search module configured to re-search the algorithm corresponding to the path calculation when the business is changed. With this device, the path calculation algorithm can be updated in time according to the business change.

In one embodiment, the above device further comprises: a receiving module configured to receive resource information optimized by a performance analysis system before performing the path calculation according to the multidimensional restriction set and the evaluation function, wherein the resource information is used for the path calculation. With this device, the performance analysis system provides basic performance data for path calculation by analyzing and optimizing the refined resources of the business, thus solving the existing problem that the future network becomes more and more complex, but the resource utilization is insufficient, and thereby planing the network resources more rationally.

In an embodiment, the above device further comprises: a delivery module configured to deliver a calculation result of the path calculation.

It should be noted that the above modules may be implemented by software or hardware. If the above modules are implemented by hardware, it may be implemented through the following methods, but not limited thereto: the above modules are all disposed in the same processor; or, the above modules are disposed in different processors in any combination.

An embodiment of the present disclosure further provides a storage medium comprising a program stored therein, wherein, when being executed, the program performs the path calculation method under multidimensional restriction provided by the embodiments of the present disclosure.

In an embodiment, the above storage medium may be set to store program code for performing the following steps:
At S1, a path calculation request from a business is received, wherein there are a plurality of business scenarios for the business, and the path calculation request comprises at least one of the following information: a restriction type corresponding to the business, and an evaluation type corresponding to the business;
At S2, the restriction type is matched with a preset multidimensional restriction model to acquire a multidimensional restriction set corresponding to the business;
At S3, the evaluation type is matched with a preset evaluation model to acquire an evaluation function corresponding to the business; and
At S4, path calculation is performed according to the multidimensional restriction set and the evaluation function.

In an embodiment, the above storage medium may include, but is not limited to: U disk, Read-Only Memory (ROM), Random Access Memory (RAM), portable hard disk, magnetic disk or optical disk and various medium that can store program codes.

An embodiment of the present disclosure further provides a processor configured to execute a program, wherein, when being executed, the program performs the path calculation method under multidimensional restriction provided by the embodiments of the present disclosure.

In an embodiment, the above program is used to perform the following steps:
At S1, a path calculation request from a business is received, wherein there are a plurality of business scenarios for the business, and the path calculation request comprises at least one of the following information: a restriction type corresponding to the business, and an evaluation type corresponding to the business;
At S2, the restriction type is matched with a preset multidimensional restriction model to acquire a multidimensional restriction set corresponding to the business;
At S3, the evaluation type is matched with a preset evaluation model to acquire an evaluation function corresponding to the business; and
At S4, path calculation is performed according to the multidimensional restriction set and the evaluation function.

In an embodiment, for examples in this embodiment, reference may be made to the examples described in the foregoing embodiments and optional implementation modes, and details are not repeated in this embodiment.

Obviously, those skilled in the art should understand that the above-mentioned modules or steps of the present disclosure can be implemented by a universal computing device, they can be integrated on a single computing device, or distributed in a network composed of multiple computing devices. In practical applications, they can be implemented with program codes executable by the computing device, so that they can be stored in the storage device so as to be executed by the computing device, and in some cases, the steps shown or described can be performed in order different from that described here, or they can be made into individual integrated circuit modules respectively, or multiple modules or steps among them can be made into a single integrated circuit module. In this manner, the present disclosure is not limited to any specific combination of hardware and software.

The descriptions as stated above are only the preferred embodiments of the present disclosure and they are not intended to limit the present disclosure. For those skilled in the art, the present disclosure may have various modifications and changes. Any modification, equivalent replacement, and improvement made within the principles of the present disclosure should be included in the protection scope of the present disclosure.

## Claims

1. A path calculation method under multidimensional restriction, comprising:
receiving a path calculation request from a business, wherein there are a plurality of business scenarios for the business, and the path calculation request comprises at least one of the following information: a restriction type corresponding to the business, and an evaluation type corresponding to the business;
matching the restriction type with a preset multidimensional restriction model to acquire a multidimensional restriction set corresponding to the business;
matching the evaluation type with a preset evaluation model to acquire an evaluation function corresponding to the business; and
performing path calculation according to the multidimensional restriction set and the evaluation function.

2. The method according to claim 1, wherein the preset multidimensional restriction model comprises at least one of the following: tenant identification ID, and the multidimensional restriction set; and the preset evaluation model comprises at least one of the following: next-hop evaluation for a network topology, and edge cost evaluation for each edge in the network topology.

3. The method according to claim 2, further comprising performing the following step before performing the path calculation according to the multidimensional restriction set and the evaluation function:
constructing a network topology model, wherein, the network topology model comprises at least one of the following information: a topology node set, a topology link set, and a tenant set.

4. The method according to claim 3, further comprising:
detecting whether the network topology information is changed; and
updating the network topology model when detecting that the network topology information is changed.

5. The method according to claim 3 or 4, wherein performing the path calculation according to the multidimensional restriction set and the evaluation function comprises:
injecting the multidimensional restriction set during traversal of the network topology graph model; and
applying the multidimensional restriction set in a next-hop selection process for the network topology model, and injecting the evaluation function in the next-hop selection process and an edge cost selection process for the network topology model to realize the path calculation.

6. The method according to claim 1, further comprising performing the following step before performing the path calculation according to the multidimensional restriction set and the evaluation function: searching for an algorithm corresponding to the path calculation, wherein the algorithm comprises at least one of the following: top K optimal paths TopK algorithm under multidimensional restriction, share risk link group SRLG algorithm under multidimensional restriction, and shortest active-standby separation path algorithm under multidimensional restriction.

7. The method according to claim 6, further comprising:
detecting in real time whether the business is changed; and
re-searching the algorithm corresponding to the path calculation when the business is changed.

8. The method according to claim 1, further comprising performing the following step before performing the path calculation according to the multidimensional restriction set and the evaluation function: receiving resource information optimized by a performance analysis system, wherein the resource information is used for the path calculation.

9. The method according to claim 1, further comprising delivering a calculation result of the path calculation.

10. A path calculation device under multidimensional restriction, comprising:
a receiving module configured to receive a path calculation request business from a business, wherein there are a plurality of business scenarios for the business, and the path calculation request comprises at least one of the following information: a restriction type corresponding to the business, and an evaluation type corresponding to the business;
a first acquiring module configured to match the restriction type with a preset multidimensional restriction model to acquire a multidimensional restriction set corresponding to the business;
a second acquiring module configured to match the evaluation type with a preset evaluation model to acquire an evaluation function corresponding to the business; and
a calculation module configured to perform path calculation according to the multidimensional restriction set and the evaluation function.

11. The device according to claim 10, wherein the preset multidimensional restriction model comprises at least one of the following: tenant identification ID, and the multidimensional restriction set; and the preset evaluation model comprises at least one of the following: next-hop evaluation for a network topology, and edge cost evaluation for each edge in the network topology.

12. The device according to claim 11, further comprising:
a construction module configured to construct a network topology model before performing the path calculation according to the multidimensional restriction set and the evaluation function, wherein the network topology model comprises at least one of the following information: a topology node set, a topology link set, and a tenant set.

13. The device according to claim 12, further comprising:
a detection module configured to detect whether the network topology information is changed; and
an updating module configured to update the network topology model when detecting that the network topology information is changed.

14. The device according to claim 12 or 13, wherein the calculation module comprises:
an injection unit configured to inject the multidimensional restriction set during traversal of the network topology graph model; and
a calculation unit configured to apply the multidimensional restriction set in a next-hop selection process for the network topology model, and inject the evaluation function in the next-hop selection process and an edge cost selection process for the network topology model to realize the path calculation.

15. The device according to claim 10, further comprising: a first search module configured to search for an algorithm corresponding to the path calculation before performing the path calculation according to the multidimensional restriction set and the evaluation function, wherein the algorithm comprises at least one of the following: top K optimal paths TopK algorithm under multidimensional restriction, share risk link group SRLG algorithm under multidimensional restriction, and shortest active-standby separation path algorithm under multidimensional restriction.

16. The device according to claim 15, further comprising:
a detection module configured to detect in real time whether the business is changed; and
a second search module configured to re-search the algorithm corresponding to the path calculation when the business is changed.

17. The device according to claim 10, further comprising: a receiving module configured to receive resource information optimized by a performance analysis system before performing the path calculation according to the multidimensional restriction set and the evaluation function, wherein the resource information is used for the path calculation.

18. The device according to claim 10, further comprising: a delivery module configured to deliver a calculation result of the path calculation.

19. A storage medium comprising a stored program, wherein, when being executed, the program performs the path calculation method under multidimensional restriction according to any one of claims 1 to 9.

20. A processor configured to run a program, wherein, when being executed, the program performs the path calculation method under multidimensional restriction according to any one of claims 1 to 9.

21. A path calculation device under multidimensional restriction, comprising:
a memory configured to store a path calculation program under multidimensional restriction; and
a processor configured to execute the program, wherein, when being executed, the program performs the multidimensional restriction path calculation method according to any one of claims 1 to 9.
